# DEMANDE DE BREVET EUROPEEN

(11) **EP 1 926 033 A1**
(43) Date de publication de la demande: **28.05.2008**
(21) Numéro de dépôt: 07291383.3
(22) Date de dépôt: 21.11.2007
(51) Int. Cl.: G06F 17/50

(54) **Procédé, programme et système informatique de simulation de chenaux**

(30) Priorité: 23.11.2006 FR 0610259
(71) Demandeur: Total S.A., 92400 Courbevoie (FR)
(72) Inventeur: Labourdette, Richard, 64230 Caubios-Loos (FR)
(74) Mandataire: Hirsch & Associés

(57) **Abrégé**

L'invention concerne un procédé de simulation de chenaux, implémenté par ordinateur, comprenant des étapes :
- d'interprétation de données caractéristiques :
- d'un chenal final (50, 150); et
- d'un chenal initial modélisé (60) ;

- de détermination, à partir des données interprétées, de points (71 - 74, 81 - 84) sur des trajectoires (70, 80) allant du chenal final au chenal initial ; et
- de simulation d'au moins un chenal (92) intermédiaire passant par ces points.

L'invention concerne également un produit de programme d'ordinateur ainsi qu'un système informatique pour l'exécution des étapes du procédé selon l'invention.

## Description

La présente invention concerne la simulation de chenaux par ordinateur.

Il est connu, notamment dans l'exploration pétrolière, des méthodes de détermination de la position des réservoirs pétroliers à partir des résultats de mesures géophysiques effectuées depuis la surface ou dans des puits de forage. L'une des méthodes de prospection la plus utile dans ce domaine est probablement la sismique, laquelle permet de visualiser des structures géologiques en profondeur grâce à l'analyse des échos d'ondes sismiques. Les ondes sismiques peuvent avoir des origines naturelles (par exemple un tremblement de terre) ou artificielles (créées par exemple au moyen d'explosifs, d'un camion vibreur, etc.). On distingue la sismique réflexion de la sismique réfraction. La sismique réflexion est utilisée pour déterminer les interfaces entre niveaux géologiques.

Parmi les structures géologiques connues, les chenaux (ou paléo chenaux) sont d'un intérêt particulier pour l'exploration pétrolière. Un chenal se définit par exemple comme un conduit d'eau en provenance du continent, chargé de sable ou de sédiments, qui suit une course de sinuosité variable le long d'une pente marine. Lorsqu'une voie d'écoulement marine se forme, elle créé un chenal qui se remplit peu à peu des sédiments charriés par le liquide. Ces sédiments sont appelés turbidites. Puis, à la faveur d'une reprise de l'écoulement après un arrêt prolongé ou lors d'une variation brutale de débit de l'écoulement, par exemple, il se créé un nouveau chenal plus ou moins déplacé par rapport au précédent. On parle alors de migration du chenal. La succession de telles séquences fabrique un complexe chenalisant.

Plus précisément, le complexe chenalisant représente un conduit de transit de sédiments, allant de la plateforme continentale vers le bassin profond. Il montre un caractère souvent érosif et se développe sur la pente continentale. Il est constitué d'un amalgame de chenaux turbiditiques individuels représentant différentes phases et événements de transport de sédiments.

Les complexes chenalisants présente une forme géométrique caractéristique de l'empilement des chenaux qui le constituent. En outre, le remplissage sédimentaire des complexes chenalisants est distinct de celui de son environnement. Le complexe chenalisant possède ainsi une enveloppe relativement précise et sa bordure peut être localisée. Les bords du complexe chenalisant sont alors déterminables à partir d'une carte isopaque réalisée entre deux horizons sismiques définissant la base du complexe et le sommet du remplissage du complexe.

Les complexes chenalisants et plus précisément les chenaux sont des réservoirs pétroliers potentiels ; ils en possèdent les caractéristiques majeures telles qu'une porosité ou une perméabilité élevée. Les chenaux sont ainsi susceptibles de contenir des huiles que l'on souhaite extraire ; il est donc utile de modéliser leur formation. Leur géométrie sinueuse les rend cependant difficiles à simuler.

En modélisation de propriétés du sous-sol, deux familles de méthodes sont généralement distinguées : les méthodes basées pixel, où la propriété est calculée en chaque noeud (pixel) d'un modèle discret (une grille structurée), et les méthodes basées objets - aussi appelées méthodes booléennes - où des objets géologiques (chenaux, lobes, dunes, etc.) sont construits puis utilisés pour estimer les valeurs de la propriété dans le modèle de réservoir.

Les méthodes basées pixel sont peu adaptées à la simulation de chenaux car elles ne permettent pas de reproduire la forme curviligne et continue des dépôts, par exemple les dépôts fluviatiles.

Il existe un grand nombre de méthodes dites basées objets, parmi lesquelles deux familles sont généralement distinguées : les méthodes déterministes et les méthodes probabilistes. Les résultats obtenus présentent beaucoup de similarités, bien que les méthodologies utilisées soient complètement différentes.

Avec les méthodes déterministes, on cherche à reproduire l'évolution du chenal dans le temps et dans l'espace. Ces méthodes sont basées sur des concepts géologiques et sédimentologiques ainsi que sur les données de visualisation sismique. Les méthodes déterministes génèrent des résultats très réalistes mais ne sont réalisables que dans le cas où les objets sont observables sur les données sismiques.

Avec les méthodes probabilistes, chaque objet géologique est défini comme une forme géométrique plus ou moins complexe. Typiquement, les chenaux sont définis à partir d'une courbe sinueuse dont la distance à l'axe du chenal est simulée selon un processus stochastique. Cette courbe simulée est utilisée comme courbe du chenal. La section du chenal est ensuite calculée en tout point de cette courbe, avec généralement une épaisseur et une largeur variables. Les résultats obtenus sont beaucoup moins réalistes qu'avec les méthodes déterministes. Pour résoudre ce problème, il a été proposé de déformer la courbe obtenue en utilisant sa géométrie et une loi conforme à l'érosion qui se fait sur le bord convexe du chenal. Les résultats obtenus sont alors plus réalistes et sinueux que les précédents.

Les méthodes booléennes de type probabiliste ont notamment ce défaut qu'elles ne permettent pas de prendre en compte les sinuosités importantes, ce qui donne lieu à des simulations géologiquement peu réalistes.

Le document EP-A- 1 584 951 apporte des perfectionnements à l'état de la technique connu, en proposant une paramétrisation préalable d'un horizon géologique de référence H, en vue de générer stochastiquement des paléo chenaux ou des paléo structures géologiques associés au voisinage de cet horizon géologique de référence.

Néanmoins, les méthodes de simulation de chenaux connues ne permettent pas d'obtenir simplement une continuité "réaliste" entre chenaux, notamment dans les zones de migration latérale. Il s'ensuit que les trajectoires des puits de développement élaborées à partir des simulations ne sont pas optimales.

L'invention a ainsi pour but de proposer un procédé de simulation automatisée, permettant d'obtenir simplement davantage de réalisme en ce qui concerne la connexité/continuité des chenaux et, par suite, d'améliorer les trajectoires de puits de développement.

Ce but est atteint grâce à un procédé de simulation de chenaux, implémenté par ordinateur, comprenant des étapes d'interprétation de données caractéristiques d'un chenal final et d'un chenal initial modélisé ; de détermination, à partir des données interprétées, de points sur des trajectoires allant du chenal final au chenal initial ; et de simulation d'au moins un chenal intermédiaire passant par ces points.

De préférence, les données interprétées sont caractéristiques d'axes respectifs des chenaux final et initial, et, à l'étape de détermination des points, les points sont déterminés sur des trajectoires allant de l'axe du chenal final à l'axe du chenal initial.

De préférence également, à l'étape de détermination, au moins une des trajectoires dépend d'une distance entre un point de l'axe du chenal final et un point de l'axe du chenal initial.

De préférence encore, le point de l'axe du chenal final est un point caractéristique d'une courbe du type B-Spline ajustée à l'axe du chenal final, le point de l'axe du chenal initial étant une projection de ce point caractéristique sur l'axe du chenal initial, par exemple une projection perpendiculaire.

De préférence, à l'étape de détermination, ladite au moins une des trajectoires est une ligne reliant l'axe du chenal final et l'axe du chenal initial, dont une courbure dépend de ladite distance entre le point de l'axe du chenal final et le point de l'axe du chenal initial.

De préférence, la trajectoire est une demi parabole d'amplitude variant selon ladite distance entre le point de l'axe du chenal final et le point de l'axe du chenal initial.

Selon une variante, la trajectoire est une ligne droite si la distance entre le point de l'axe du chenal final et le point de l'axe du chenal initial est supérieure à une distance critique ; sinon, la trajectoire est une demi parabole d'amplitude variant selon la distance entre le point de l'axe du chenal final et le point de l'axe du chenal initial.

De préférence, la distance critique est une distance calculée en fonction des données interprétées.

Selon une variante, la distance critique est modifiable par l'utilisateur.

De préférence, le procédé selon l'invention comprend en outre, avant l'étape d'interprétation des données, les étapes: de lecture de données relatives à un complexe chenalisant ; et de calcul des données caractérisant le chenal initial et/ou le chenal final à partir des données relatives au complexe chenalisant.

De préférence également, les données relatives au complexe chenalisant caractérisent des bords dudit complexe, et, à l'étape de calcul des données caractérisant le chenal initial et/ou le chenal final : l'axe du chenal initial et/ou le chenal final est déterminé en fonction des bords dudit complexe.

Selon un mode de réalisation, les données calculées caractérisent le chenal initial, et, à l'étape de calcul de ces données : l'axe du chenal initial est la médiane des bords dudit complexe.

Selon un autre mode de réalisation, les données calculées caractérisent le chenal final, et, à l'étape de calcul de ces données : l'axe du chenal final est déterminé en fonction : de la courbure des bords dudit complexe, en des points caractéristiques de chacun de ces bords ; et du signe de la courbure de ces points caractéristiques.

L'invention concerne également un produit de programme d'ordinateur, le programme comprenant des routines pour l'exécution des étapes du procédé selon l'invention, lorsque ledit programme est exécuté sur un ordinateur.

L'invention concerne encore un système informatique comprenant une mémoire contenant un programme comprenant des routines pour l'exécution des étapes du procédé selon l'invention, lorsque ledit programme est exécuté.

D'autres caractéristiques et avantages de l'invention apparaîtront à la lecture de la description détaillée qui suit des modes de réalisation de l'invention, donnés à titre d'exemple uniquement et en références aux dessins annexés, qui illustrent :
- Figure 1 : une interprétation d'une carte d'amplitude sismique dans un complexe chenalisant montrant une migration latérale;
- Figure 2 : une interprétation en terme de facies réservoirs d'une ligne sismique dans un complexe chenalisant montrant une migration latérale ;
- Figure 3 : une interprétation en terme de facies réservoirs d'une ligne sismique dans un complexe chenalisant montrant une avulsion ;
- Figure 4A - C : une carte d'amplitude sismique (figure 4A) et son interprétation en chenaux élémentaires (figure 4B), la figure 4C montrant le résultat d'une simulation géostatistique « classique » des chenaux de la figure 4B ;
- Figure 5 : une courbe de type B-Spline de l'axe centrale du chenal final et l'extraction de points caractéristiques de cette courbe ;
- Figure 6 : la création d'une ligne médiane d'un complexe chenalisant et la projection perpendiculaire de points caractéristiques du chenal final sur cette ligne médiane ;
- Figure 7A - B : la détermination de trajectoires en fonction d'une distance critique, dans les cas où : (figure 7A) la distance critique est inférieure à la distance de projection, et (figure 7B) la distance critique est supérieure à la projection ;
- Figure 8 : la définition de points sur des trajectoires afin de simuler des chenaux intermédiaires passant par ces points ;
- Figure 9A - B : la comparaison de cartes de chenaux interprétés à partir des données sismiques (figure 9A) et de chenaux simulés selon un mode de réalisation de l'invention (figure 9B) ;
- Figure 10: la reconstruction du chenal final à partir des points caractéristiques des bords d'un complexe chenalisant, selon un autre mode de réalisation de l'invention ;
- Figure 11A - B : la comparaison du chenal final issu des données sismiques (figure 11A) et du chenal final simulé à partir de la morphologie du complexe chenalisant (figure 11B) ; et
- Figure 12A - B : la comparaison de cartes des chenaux interprétés à partir des données sismiques (figure 12A) et de chenaux simulés à partir du chenal final simulé selon la figure 10 (figure 12B).

L'idée de développer un procédé de modélisation de chenaux turbiditiques en implémentant des règles géométriques simple est née du constat que les modules actuels de modélisation de type objets géostatistiques ne permettent pas de retranscrire de manière cohérente l'agencement des chenaux au sein d'un complexe chenalisant.

En effet, les observations faites, tant sur les analogues de terrain que sur les données sismiques à haute résolution, montrent une organisation spécifique des chenaux au sein des complexes chenalisants. Cet agencement joue un rôle prépondérant sur la géométrie de réservoirs, mais aussi sur la répartition des hétérogénéités présentes dans des réservoirs turbiditiques.

L'approche choisie dans l'invention, de type géométrique, est indirectement issue d'observations de l'agencement des chenaux élémentaires constituant ces complexes chenalisants.

Cette approche se base sur le principe que la forme finale du complexe chenalisant est issue de migrations de chenaux élémentaires au cours du dépôt. En combinant :
- la forme finale du complexe qui est, dans la majeure partie des cas, observable en sismique ;
- le cas échéant, la position éventuelle de certains des chenaux élémentaires qui la constituent, et
- des règles d'évolution du système (sur lesquelles se basent les trajectoires), le présent inventeur a réalisé qu'il était possible de définir une architecture réservoir réaliste et compatible avec les observations.

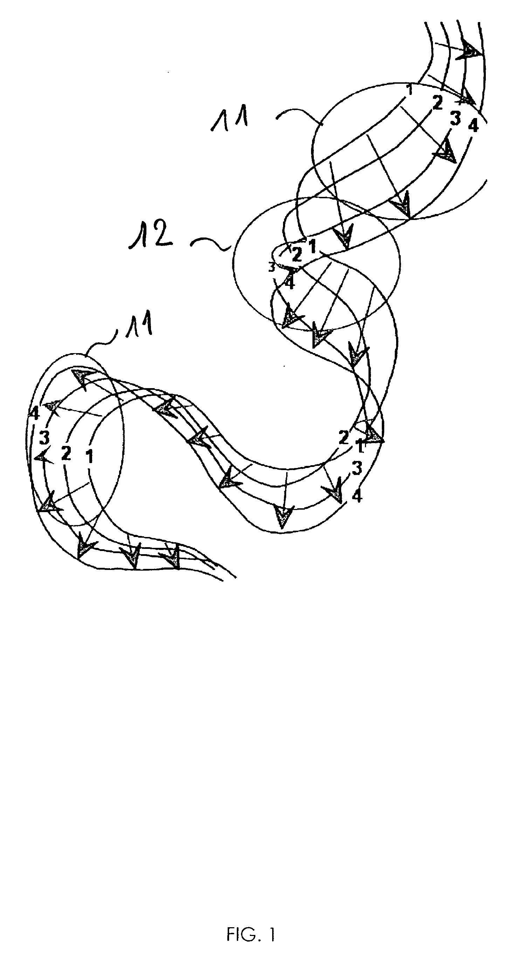

La figure 1 illustre une interprétation d'une carte d'amplitude sismique dans un complexe chenalisant montrant une migration latérale. En référence à cette figure et à des fins de compréhension de l'invention, il est ci-après décrit sommairement comment la migration latérale opère en contexte turbiditique.

La migration latérale constituant les réservoirs turbiditiques se fait par une succession de phases d'érosion et de remplissage partiel d'un chenal élémentaire migrant au cours du temps. Cette migration se fait perpendiculairement par rapport au sens de l'écoulement, mais aussi longitudinalement. Le résultat est une organisation appelée LOSC (de l'anglais "Laterally Offset Stacked Channels"), montrant une évolution de la morphologie des chenaux individuels 1, 2, 3, 4 au cours du temps, d'une forme à sinuosité de plus en plus accentuée, vers une forme finale balayant le complexe chenalisant (figure 1).

Cette organisation montre, sur la figure 1, deux motifs distincts 11 et 12, qui vont avoir des influences différentes sur le comportement dynamique du réservoir :
• Le premier motif 11 montre la forme classique de la migration latérale, que l'on peut qualifier d'étalée, fortement sinusoïdale, et qui permet de créer des boucles de méandre balayant l'ensemble du complexe.
• Le deuxième motif 12 est constitué par les changements abrupts de position du chenal au cours du temps ; ce sont les zones d'avulsion. Les chenaux s'y superposent verticalement et construisent un motif complexe dans lequel les chenaux sont enchevêtrés et s'érodent les uns les autres en de multiples points.

Ces deux motifs 11 et 12 présentent des taux de préservation d'hétérogénéités différents.

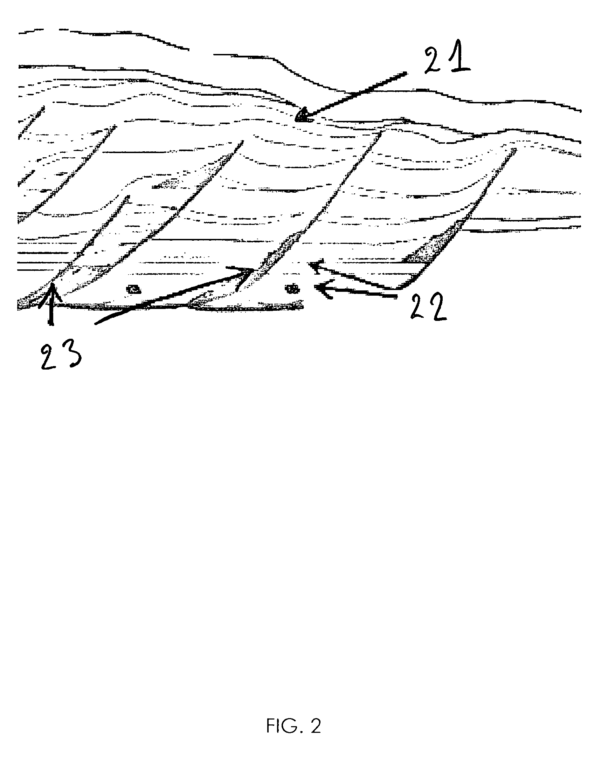

Dans le premier cas (zone de migration latérale, motif 11 de la figure 1), les barrières imperméables liées aux bordures des chenaux sont fortement préservées, pouvant dans certains cas dissocier complètement des boucles de méandres, piégeant par la même occasion des hydrocarbures. Ce cas est illustré sur la figure 2, qui montre une interprétation en terme de facies réservoirs d'une ligne sismique dans un complexe chenalisant avec migration latérale. Sur la figure 2, les références 21, 22 et 23 dénotent respectivement : des argiles distales 21 (non réservoir), des sables de chenaux 22 (réservoir) et des barrières imperméables 23.

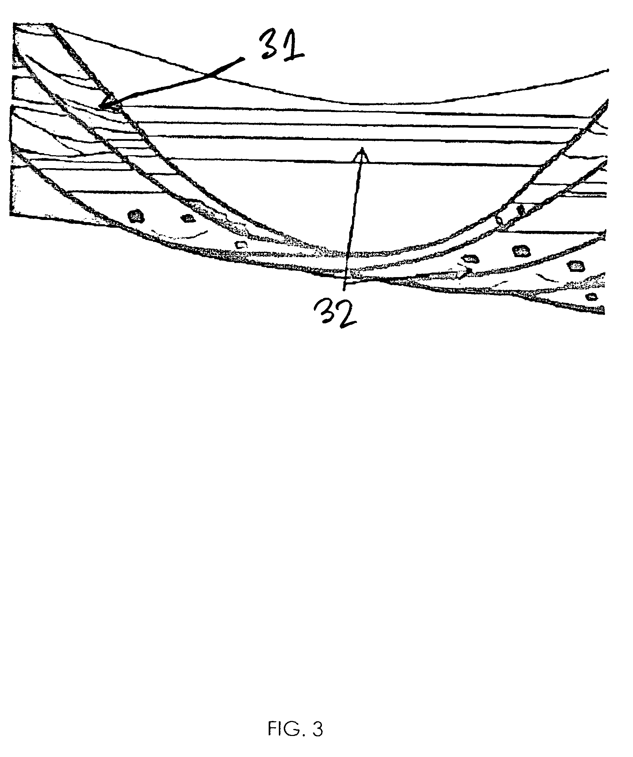

Le second cas (avulsion, motif 12 de la figure 1) est illustré sur la figure 3, qui montre une interprétation en terme de facies réservoirs d'une ligne sismique dans un complexe chenalisant avec avulsion. Les références 31 et 32 dénotent respectivement : des argiles distales 31 (non réservoir) et des sables de chenaux 32 (réservoir). Ici, les barrières imperméables sont plus faiblement préservées ; le comportement dynamique du champ est ainsi très différent du premier cas.

On comprend à présent que la répartition de ces motifs à l'intérieur du réservoir turbiditique pourra jouer un rôle crucial dans l'appréhension du chenal pour la planification du développement du champ pétrolier associé. Une modélisation de qualité est nécessaire, tout particulièrement dans les zones de migration latérale.

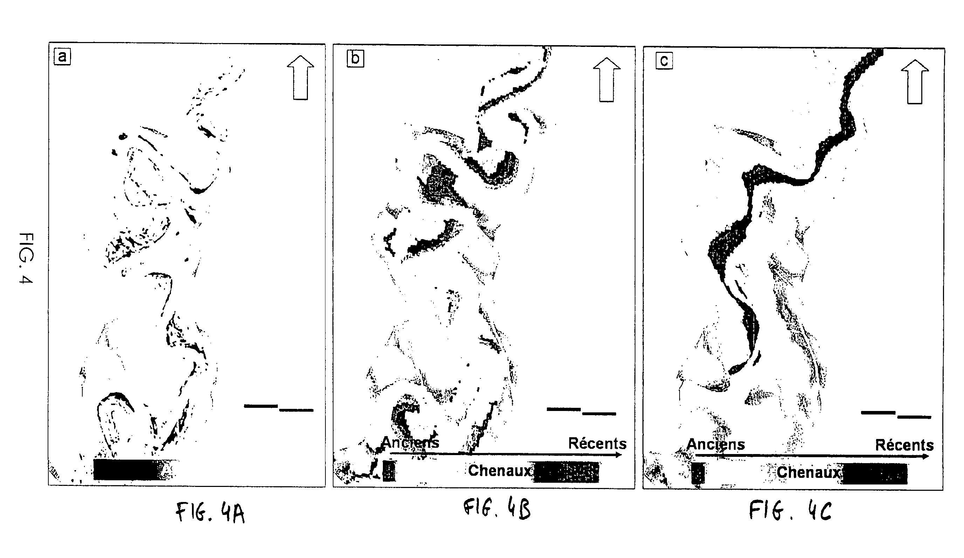

Les figures 4A - C montrent une carte d'amplitude sismique (figure 4A) et son interprétation en chenaux élémentaires (figure 4B), la figure 4C montrant le résultat d'une simulation géostatistique "classique" des chenaux de la figure 4B.

En référence à ces figures, le procédé selon l'invention est basé sur des lois géométriques issues de l'observation du phénomène sur les données sismiques haute résolution. Ces données sismiques offrent une image de qualité exceptionnelle du phénomène de migration latérale (correspondant à la figure 4A). Il est à noter que pour se conformer aux critères d'impression des documents de brevets, les images sur les figures 4A - C ont dû être retravaillées ; certains détails y sont donc moins visibles que sur des vues en couleurs.

La comparaison des figures 4A - C montre que la simulation géostatistique "classique" (figure 4C) ne respecte pas l'organisation des chenaux élémentaires, par rapport à l'interprétation donnée sur la figure 4B.

L'invention apporte une solution à ce problème grâce à une simulation d'un ou plusieurs chenaux intermédiaires passant par des points sur des trajectoires allant du chenal final au chenal initial. Les trajectoires en question se distinguent des axes ou des lignes de chenaux; elles reflètent la migration des chenaux au cours du temps. Recourir à ces trajectoires assure une certaine cohérence dans l'agencement des chenaux simulés au sein du complexe chenalisant. Partir du chenal final pour aboutir au chenal initial s'avère en outre judicieux dans la mesure où l'information relative au chenal final est la plus fréquemment observable voire quantifiable à partir des données sismiques. Les trajectoires en question sont donc inversées par rapport aux trajectoires de migration des chenaux dans le temps. Par conséquent, simuler un chenal intermédiaire passant par des points sur ces trajectoires permet d'obtenir plus de réalisme en ce qui concerne la connexité/continuité des chenaux.

Avant de décrire plus avant les détails d'implémentation de l'invention, il faut mentionner deux cas distincts de construction, que l'on peut envisager dans le cadre de l'invention.
• Dans le premier cas, le dernier chenal de la migration, marquant un arrêt de sédimentation, est rempli d'argile, ce qui permet une observation directe (complète ou partielle) sur des images sismiques, même de moyenne définition (le contraste d'impédance entre les sables des autres chenaux et l'argile du dernier le faisant apparaître). Le procédé selon l'invention permet, selon un mode de réalisation, une simulation plus spécifiquement adaptée à ce premier cas.
• Dans le second cas, le dernier chenal n'est pas rempli d'argile (la baisse d'apports sédimentaires n'étant pas suffisante), il n'est donc pas distinctement observable. Il peut cependant être reconstitué, selon l'invention, grâce la morphologie du complexe lui-même. L'invention permet, selon un autre mode de réalisation, de simuler plus spécifiquement le second cas.

Les deux modes de réalisation en question sont discutés ci-après.

En tout état de cause, on suppose que l'on dispose de données numériques caractéristiques du complexe et le cas échéant du chenal final (premier cas). Ces données vont permettre de modéliser un chenal initial et, le cas échéant, le chenal final (second cas ci-dessus). On disposera alors dans tous les cas de figure, à un stade donné du déroulement de l'algorithme à la base de l'invention, de données caractéristiques d'un chenal final (le cas échéant modélisé) et d'un chenal initial modélisé, lesquels vont à leur tour permettre la simulation de chenaux souhaitée.

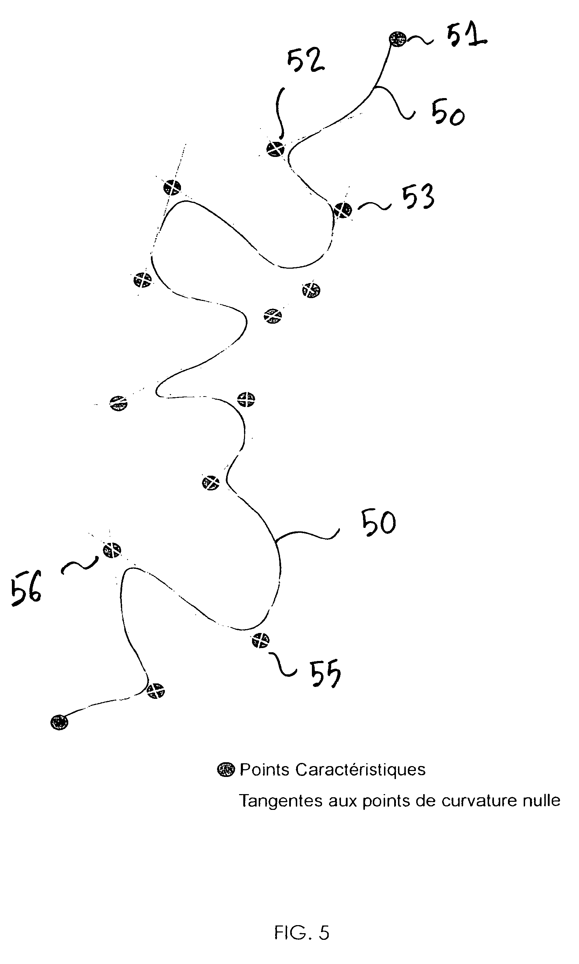

On décrit dans ce qui suit le mode de réalisation de l'invention qui se destine plus particulièrement au premier cas ci-dessus et ce, en référence à la figure 5. Cette figure montre une courbe de type B-Spline modélisant l'axe central du chenal final; elle illustre en outre une extraction de points caractéristiques de cette courbe.

Le dernier chenal, lequel est visible ou partiellement visible, peut servir de base à la construction géométrique des autres chenaux. On se place ainsi dans un contexte où l'on dispose de données caractéristiques du chenal final.

L'idée développée selon l'invention est de revenir en sens inverse dans le temps, vers la morphologie du chenal initial, en se basant par exemple sur la morphologie globale du complexe. On se place donc dans un contexte où l'on dispose de données caractéristiques du complexe, lesquelles vont permettre de modéliser un chenal initial. En d'autres termes, les données caractéristiques du complexe vont permettre d'obtenir des données caractéristiques du chenal initial modélisé.

On considère que la morphologie du chenal évolue alors entre l'état final et l'état initial de manière cohérente et selon un nombre d'états finis, le cas échéant imposés par l'utilisateur. Ces états reflètent en réalité le nombre de chenaux distincts. Le nombre d'états permet donc de fixer le nombre de chenaux intermédiaires que l'on souhaite simuler. Ce nombre est par exemple déductible de l'expérience. Il peut en variante être contenu ou déductible des données interprétées selon le procédé, aux fins de la simulation.

La démarche peut alors par exemple consister à appliquer une courbe paramétrée 50 sur l'axe (c'est-à-dire la ligne centrale) du chenal final pointé sur la sismique. Ceci permet de caractériser l'axe 50 de ce chenal. Par "axe", on entend une ligne (incurvée) idéale par rapport à laquelle s'ordonnent dans un certain équilibre les éléments caractéristiques d'un chenal. L'axe, une fois caractérisé, peut alors servir de support aux trajectoires à partir desquelles sont simulés les chenaux intermédiaires.

Par la suite, on considère que la courbe paramétrée est une B-Spline. Cependant, d'autres types de représentation, telles que la représentation polynomiale ou par fractions rationnelles par morceaux, peuvent être envisagés.

De cette courbe 50 sont extraits des points caractéristiques 51, 52, 53, 55, 56 de l'axe du chenal final (cf. figure 5). En pratique, ces points sont des points de contrôle de la courbe. La courbe 50, bien qu'elle corresponde à un état final, est le point départ de la démarche utilisée dans l'invention. En outre, bien qu'il soit ci-après fait référence à des chenaux final et initial, if faut comprendre qu'un chenal final est un chenal élémentaire ayant migré au cours du temps par rapport à un chenal initial particulier. Un chenal final correspond donc à un état postérieur à l'état initial.

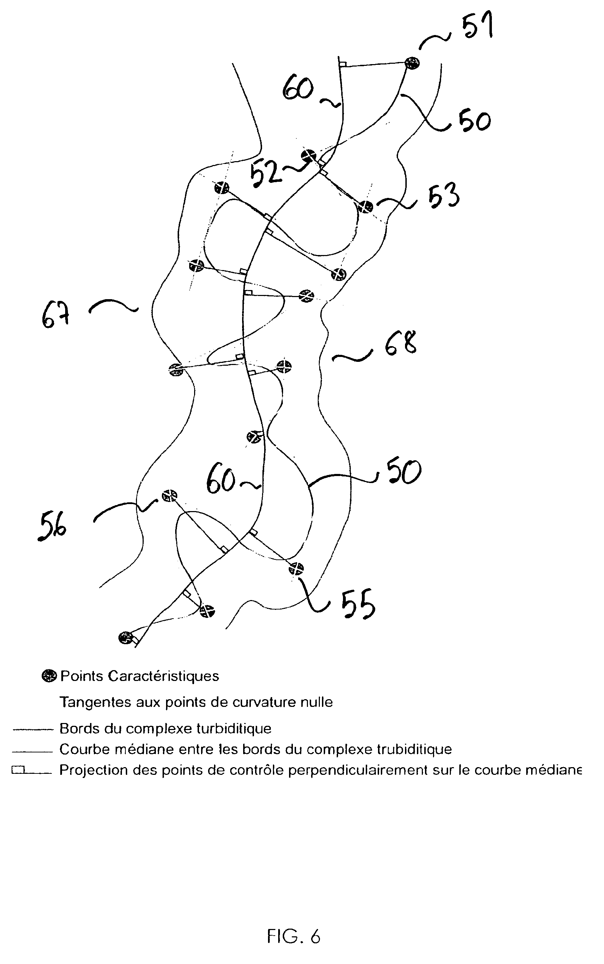

Le point d'arrivée (c'est-à-dire correspondant à l'état initial ou au chenal initial) est par exemple déterminé en fonction de la morphologie, typiquement les bords du complexe. Ceci est illustré sur la figure 6. Pour ce faire, on extrait une courbe médiane 60 des deux bords 67, 68 du complexe chenalisant, dont on possède les données caractéristiques. Ceci se généralise sans difficulté à des données tridimensionnelles relatives au complexe.

La courbe médiane 60 est par exemple traitée de la même manière que la courbe 50. par exemple par application d'une courbe de type B-Spline 60. On dispose ainsi à présent de données caractéristiques de l'axe du chenal initial modélisé 60, issues de la morphologie du complexe. Ceci va permettre de déterminer des points sur des trajectoires allant du chenal final au chenal initial, et plus précisément de l'axe du chenal final 50 à l'axe du chenal initial 60.

D'autres types de données caractéristiques de l'axe du chenal initial peuvent cependant être envisagés, en intégrant par exemple des éléments issus de l'interprétation d'une image sismique.

Afin de garantir que les trajectoires soient cohérentes avec les chenaux, celles-ci sont de préférence modélisées comme étant dépendantes d'une distance entre un point 52, 53, 55, 56 de l'axe 50 du chenal final et un point de l'axe 60 du chenal initial. Les trajectoires sont ainsi facilement paramétrées en fonction des axes de chenaux, lesquels sont représentatifs de la géométrie des chenaux final et initial. Les trajectoires obtenues sont ainsi cohérentes avec la morphologie du complexe.

A cet égard, les points caractéristiques 52, 53, 55, 56 de la ligne du chenal final 50 (c'est-à-dire les points de contrôle de la B-Spline) peuvent par exemple être projetés sur la courbe médiane 60 déterminée précédemment (comme illustré sur la figure 6). La projection est typiquement une projection perpendiculaire. On dispose alors d'un ensemble de distances caractéristiques entre des points de l'axe du chenal final 50 et des points de l'axe du chenal initial 60. Ces distances (que l'on appelle ensuite distances de projection) permettent de paramétrer les trajectoires.

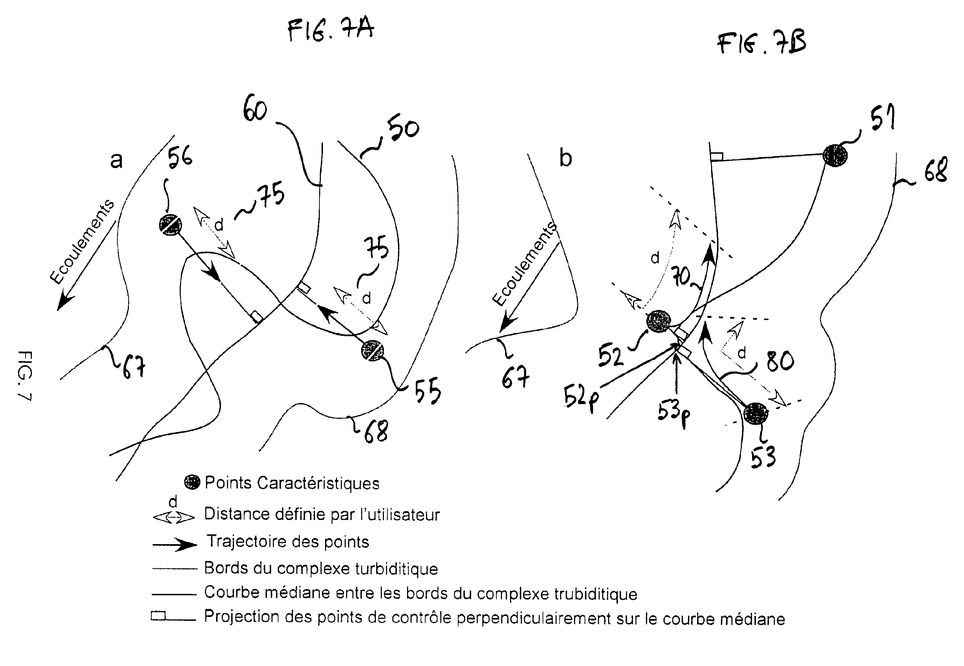

Les figures 7A - B illustrent la détermination de trajectoires en fonction d'une distance critique.

En référence à ces figures, les trajectoires sont de préférence modélisées comme des lignes reliant l'axe du chenal final 50 et l'axe du chenal initial 60, dont une courbure dépend des distances de projection précédemment déterminées.

Par "courbure" d'une trajectoire, on entend une mesure quantitative du caractère plus ou moins courbé de cette trajectoire. La courbure peut être nulle (Figure 7A), auquel cas l'on obtient un segment de droite, ou localement non nulle (Figure 7B), auquel cas on obtient une courbe localement incurvée.

Plus en détail, le mouvement initié sur les points caractéristiques, est par exemple effectué selon une demi parabole 70, 80 (Figure 7B) dont le foyer est calculé par rapport au point d'origine 52, 53 sur l'axe du chenal final et dont l'orientation de la directrice est définie par la projection 52p, 53p du point d'origine sur la courbe médiane 60, c'est-à-dire l'axe du chenal initial modélisé (Figure 7B). L'amplitude de la parabole est ainsi directement liée à la morphologie du complexe chenalisant. Ceci contribue à améliorer le réalisme des chenaux simulés.

En variante, un autre type de courbe (par exemple un segment de gaussienne) peut être envisagé.

Selon une autre variante, le type de courbe utilisé varie en fonction de la distance de projection. Par exemple, une longueur ou distance critique 75 (notée d sur la figure 7) peut servir à gérer le type de courbe utilisé. Cette longueur est par exemple définie par l'utilisateur ou calculée d'après la morphologie du complexe selon un modèle donné. Comme illustré sur la figure 7A, si la distance de projection est supérieure à la distance critique d, alors la trajectoire du point est une droite. Sinon, comme le montre la figure 7B, si la distance de projection est inférieure à la distance critique d, alors la trajectoire effectuée par le point de contrôle est une demi parabole dont l'amplitude est proportionnelle à cette distance reportée le long de la droite de projection puis le long de l'axe du chenal initial dans le sens inverse des écoulements (figure 7B).

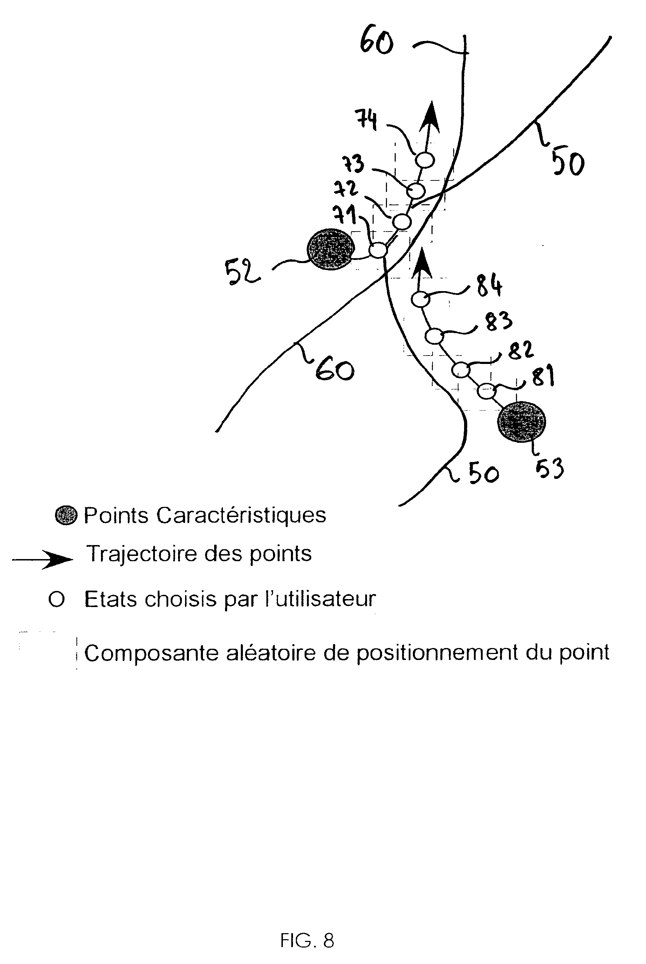

Comme illustré sur la figure 8, le nombre d'états (le cas échéant paramétrable par l'utilisateur) sert alors à extraire des points 71 - 74, 81 - 84 de ces trajectoires 70, 80, afin de les associer ultérieurement à des chenaux respectifs. Pour plus de réalisme dans la simulation à suivre, une composante aléatoire de positionnement des points peut être introduite par le biais d'une aire d'incertitude (le cas échéant également paramétrable par l'utilisateur). Les centres des aires en question peuvent en revanche être régulièrement distribués sur les trajectoires. Les aires peuvent le cas échéant se recouvrir partiellement, comme illustré sur la figure.

En ce qui concerne la simulation des chenaux intermédiaires, les lignes centrales des chenaux intermédiaires sont créées par association des points 71 - 74, 81 - 84 obtenus en correspondance avec chaque état (ici quatre états 1-4 sont représentés). On utilise par exemple une B-Spline ajustée aux points correspondant à un état, pour chacun des états. La morphologie finale des chenaux intermédiaires est alors obtenue par application d'une morphologie centrée sur chacun des axes de chenaux intermédiaires.

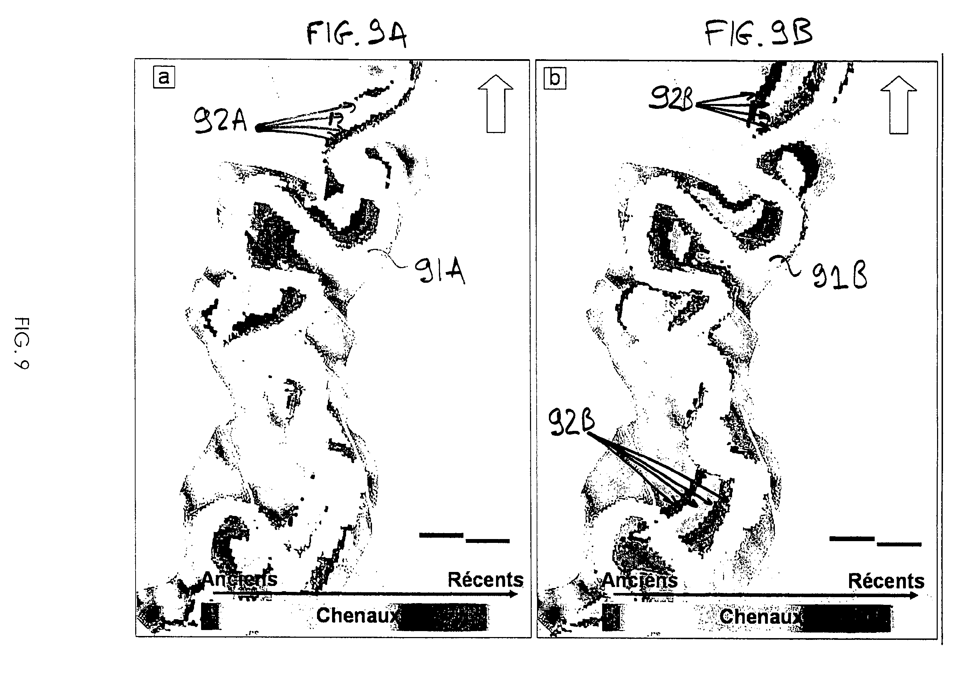

Comme le montre la comparaison des cartes des chenaux 91A, 92A interprétés à partir des données sismiques (figure 9A, correspondant à la figure 4B) et des chenaux 91B, 92B simulés selon le présent mode de réalisation (figure 9B): l'agencement de chenaux 92B intermédiaires obtenus est particulièrement réaliste. La comparaison avec la figure 4C (simulation géostatique) montre en outre que la mise en oeuvre du procédé selon l'invention améliore nettement le réalisme des chenaux. En particulier, les chenaux simulés selon la présente invention offrent une connexité latérale plus réaliste.

Il convient de noter que les chenaux finals 91 A et B sont identiques ici, compte tenu du cas de figure dans lequel on se place. En effet, les données relatives au chenal final 91 issues de l'interprétation de la figure 9A sont typiquement utilisées comme données d'entrée pour la simulation de la figure 9B.

Il est à présent décrit un mode de réalisation dont la mise en oeuvre convient plus spécifiquement au second cas évoqué ci-dessus, afin de simuler une migration latérale en l'absence de données relatives au chenal final.

Dans un tel cas, il n'est pas possible de distinguer immédiatement le dernier chenal. La démarche adoptée dans le premier mode de réalisation doit donc être légèrement modifiée: l'état final doit en outre être modélisé, afin d'obtenir des données caractéristiques du dernier chenal. Une fois que ces données sont disponibles, l'algorithme peut se dérouler conformément au premier mode de réalisation, décrit plus haut.

La modélisation du chenal final est dans le présent cas de figure également basée sur la morphologie du complexe chenalisant. Ceci s'avère approprié dans la mesure où cette morphologie contient localement l'information nécessaire à la reconstitution du dernier chenal, (notamment dans les boucles de méandres).

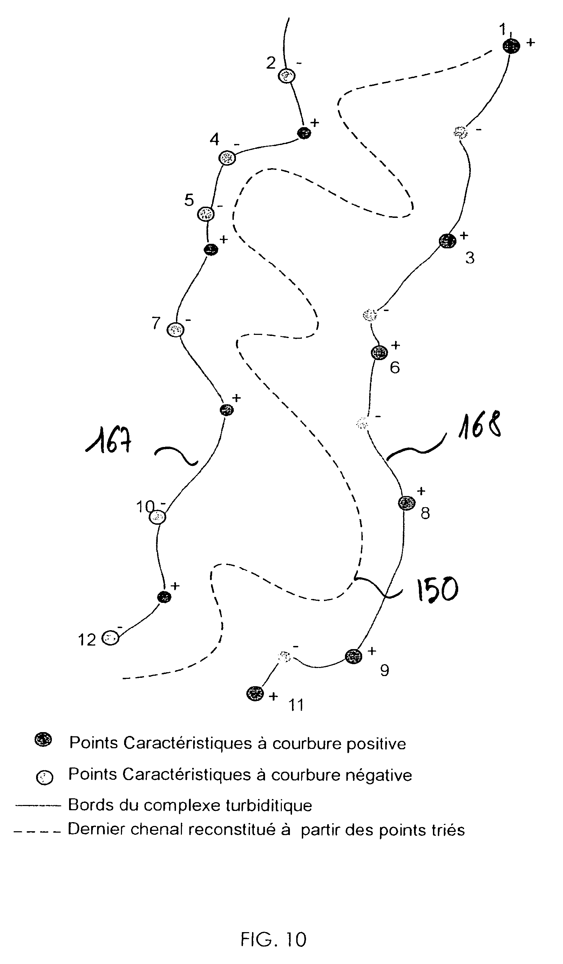

La méthodologie adoptée pour créer le dernier chenal, s'inspire donc de méthodologie précédente. Cette méthodologie est décrite en référence à la figure 10, qui illustre la reconstruction du chenal final à partir des points caractéristiques de chacun des bords du complexe.

Des courbes de type B-Spline sont par exemple appliquées à chacun des bords 167, 168 du complexe, permettant d'en extraire les points caractéristiques ainsi que le signe de courbure de chacun des bords. Par exemple, les points numérotés 1, 3, 6, 8, 9, 11 sont des points du bord 167 à courbure positive (au sens géométrique). Les points numérotés 2, 4, 5, 7, 10, 12 sont des points à courbure négative du bord 168.

L'axe 150 du chenal final est par exemple déterminé en fonction de la courbure et du signe de la courbure en des points caractéristiques des bords 167, 168.

Plus en détail, l'utilisateur désigne éventuellement un premier point de contrôle, sur un des bords du complexe. En variante, celui-ci est déterminé automatiquement, par exemple selon un ordre d'apparition (c'est dans le cas présent le point 1, le plus au nord du complexe). Ensuite, tous les points de contrôle 1, 3, 6, 8, 9, 11 ayant le même signe de courbure sont alors extraits, ainsi que les points 2, 4, 5, 7, 10, 12 de contrôles de signe opposé sur le bord du complexe opposé. Un tri sur le signe de courbure associé aux points caractéristiques de chacun des bords du complexe est ainsi opéré. Les points de courbure retenus "sautent" d'un bord à l'autre en changeant de signe. Ces points sont alors assemblés selon leur ordre respectif d'apparition pour permettre de créer un chenal final 150 artificiel par application d'une B-Spline. Le tri effectué permet ainsi de déterminer simplement des inflexions successives de la courbe 150 modélisant l'axe du chenal final, en s'appuyant sur la morphologie du complexe initial.

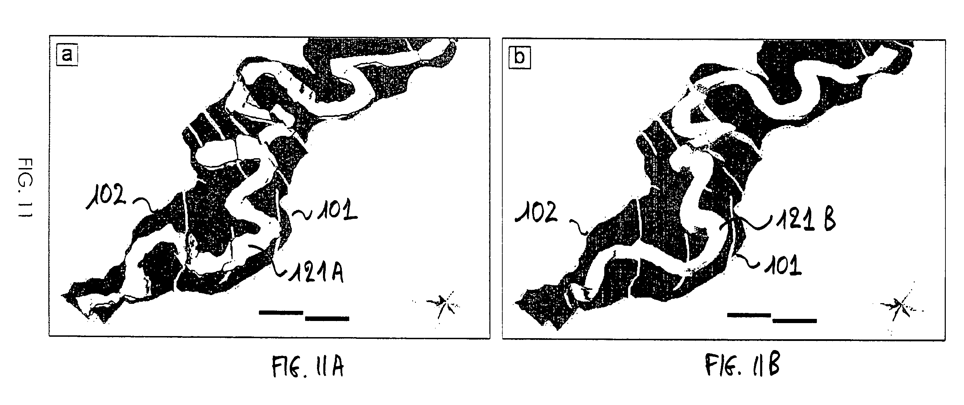

La figure 11 permet de comparer sur un exemple un chenal final 121A issu des données sismiques (figure 11A) et le chenal final 121B simulé à partir de la morphologie 101, 102 du complexe chenalisant, selon le présent mode de réalisation. Comme le donne à voir la figure 11, le réalisme du chenal final 121B simulé est saisissant.

Une fois que le chenal final est reconstitué, il est possible d'appliquer la méthodologie correspondant au premier mode de réalisation. On peut alors reconstituer les chenaux constituant le complexe.

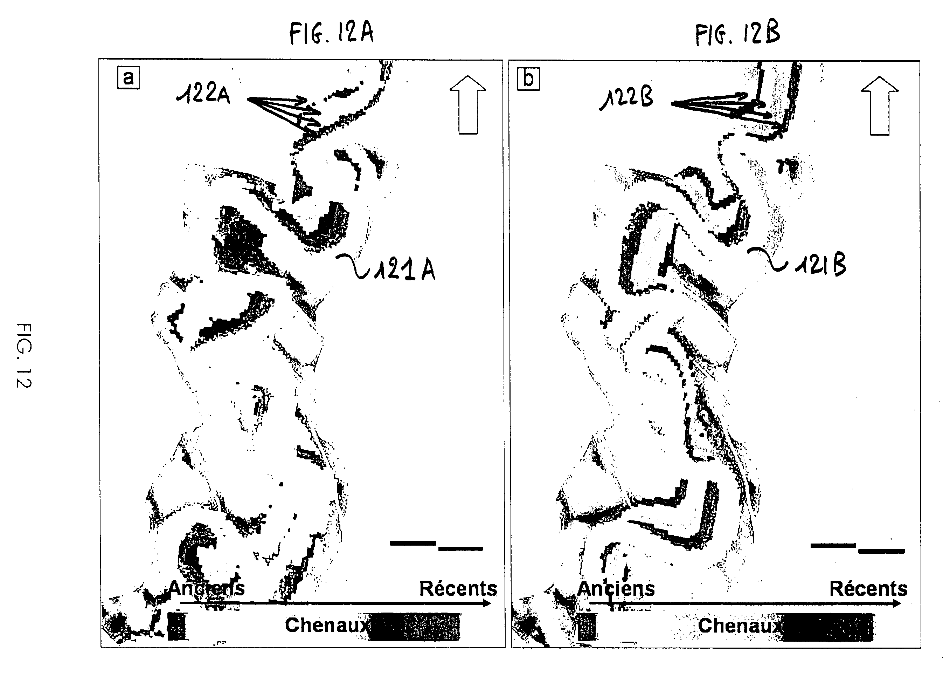

La figure 12 permet de comparer des cartes de chenaux interprétés 122A à partir des données sismiques (figure 12A) avec des cartes de chenaux intermédiaires 122B simulés selon le premier mode de réalisation, à partir du chenal final 121 B simulé comme décrit ci-dessus (figure 12B). Contrairement à l'exemple associé au mode de réalisation précédent, les chenaux 121A et 121B ne sont plus identiques. Cependant, là encore, le réalisme des chenaux 122B est marquant, bien que le chenal final 121 B ait été simulé.

Le procédé selon l'invention peut par ailleurs être implémenté dans un programme et mise en oeuvre par ordinateur. Le programme en question peut faire l'objet d'un module, lequel peut à son tour être inséré dans un autre programme, plus général.

Le module résultant offre une possibilité de simulation améliorée de chenaux, en particulier de chenaux en migration latérale, dans les réservoirs turbiditiques. Un tel module permet de pallier le manque d'organisation des chenaux générés par des méthodes de simulation objet géostatistiques. Il en résulte une répartition optimale des barrières à l'intérieur des modèles réservoirs en contexte chenalisant. Un impact direct de la mise en oeuvre de l'invention est une réduction des coûts liés à l'optimisation de la trajectoire des puits de développement, et par conséquent une meilleure exploitation des pièges pétroliers en complexe chenalisant. Le procédé selon l'invention peut faire partie intégrante d'un procédé d'optimisation de trajectoires de puits de développement. L'augmentation de la récupération d'huile peut alors atteindre 20% dans certains cas.

L'invention n'est cependant pas limitée aux variantes décrites ci avant mais est susceptible de nombreuses autres variations aisément accessibles à l'homme du métier.

Par ailleurs, des données relatives à un chenal intermédiaire peuvent éventuellement être intégrées à la simulation de sorte à contraindre ce chenal intermédiaire selon ces données. Dans ce cas, on combine les données relatives à la forme finale du complexe, lesdites données relatives au chenal intermédiaire et les règles d'évolution du système (sur lesquelles se basent les trajectoires).

Il convient de noter que seuls les principaux aspects novateurs de l'invention ont été décrits en détail.

En outre, bien que les deux modes de réalisation ci-dessus aient été présentés distinctement, ces deux modes de réalisation sont parfaitement compatibles. Par exemple, un assistant du module ou programme mettant en oeuvre l'invention peut proposer à l'utilisateur de simuler le chenal final à partir des caractéristiques du complexe.

En variante, cette option peut être appliquée par défaut, tout en restant paramétrable par l'utilisateur. Si l'utilisateur refuse cette option, l'algorithme se déroule selon le premier mode de réalisation. Si, au contraire, l'utilisateur choisit cette option l'algorithme se déroule alors selon le second mode de réalisation.

## Revendications

1. Procédé de simulation de chenaux, implémenté par ordinateur, comprenant des étapes :
- d'interprétation de données caractéristiques :
- d'un chenal final (50, 150); et
- d'un chenal initial modélisé (60) ;
- de détermination, à partir des données interprétées, de points (71 - 74, 81 - 84) sur des trajectoires (70, 80) allant du chenal final au chenal initial ; et
- de simulation d'au moins un chenal (92) intermédiaire passant par ces points.

2. Le procédé selon la revendication 1,
dans lequel les données interprétées sont caractéristiques :
- d'axes respectifs (50, 60) des chenaux final et initial,
et dans lequel, à l'étape de détermination des points :
les points sont déterminés sur des trajectoires (70, 80) allant
de l'axe (50) du chenal final
à l'axe (60) du chenal initial.

3. Le procédé selon la revendication 2, dans lequel, à l'étape de détermination :
au moins une des trajectoires (70, 80) dépend d'une distance entre :
un point (53) de l'axe (50) du chenal final et
un point (52) de l'axe du chenal initial.

4. Le procédé selon la revendication 3, dans lequel :
le point (53) de l'axe du chenal final est
un point caractéristique
d'une courbe (50) du type B-Spline ajustée à l'axe du chenal final;
le point (53p) de l'axe du chenal initial est
une projection de ce point (53) caractéristique
sur l'axe (60) du chenal initial, par exemple une projection perpendiculaire.

5. Le procédé selon la revendication 3 ou 4, dans lequel, à l'étape de détermination :
ladite au moins une des trajectoires (70, 80) est
une ligne reliant l'axe (50) du chenal final et l'axe du chenal initial (60),
dont une courbure dépend de ladite distance entre le point de l'axe (52, 53) du chenal final et le point (52p, 53p) de l'axe du chenal initial.

6. Le procédé selon la revendication 5, dans lequel
la trajectoire (70, 80) est une demi parabole d'amplitude variant selon ladite distance entre le point (52, 53) de l'axe du chenal final et le point (52p, 53p) de l'axe du chenal initial.

7. Le procédé selon la revendication 5, dans lequel :
la trajectoire est une ligne droite si la distance entre le point de l'axe du chenal final et le point de l'axe du chenal initial est supérieure à une distance critique (75) ;
sinon, la trajectoire est une demi- parabole (70, 80) d'amplitude variant selon la distance entre le point de l'axe du chenal final et le point de l'axe du chenal initial.

8. Le procédé selon la revendication 7, dans lequel:
la distance critique (75) est
une distance calculée en fonction des données interprétées.

9. Le procédé selon la revendication 7 ou 8, dans lequel :
la distance critique (75) est modifiable par l'utilisateur.

10. Le procédé selon l'une des revendications 2 à 9, comprenant en outre, avant l'étape d'interprétation des données, les étapes:
- de lecture de données relatives à un complexe chenalisant (67, 68, 167, 168) ; et
- de calcul des données caractérisant le chenal initial et/ou le chenal final à partir des données relatives au complexe chenalisant (67, 68, 167, 168).

11. Le procédé selon la revendication 10, dans lequel :
les données relatives au complexe chenalisant (67, 68, 167, 168) caractérisent des bords dudit complexe,
et dans lequel. à l'étape de calcul des données caractérisant le chenal initial et/ou le chenal final:
l'axe du chenal initial (60) et/ou le chenal final (150) est déterminé en fonction des bords dudit complexe.

12. Le procédé selon la revendication 11, dans lequel :
les données calculées (60) caractérisent le chenal initial,
et dans lequel, à l'étape de calcul de ces données :
l'axe (60) du chenal initial est la médiane des bords (67, 68) dudit complexe.

13. Le procédé selon la revendication 11, dans lequel:
les données calculées (150) caractérisent le chenal final,
et dans lequel, à l'étape de calcul de ces données :
l'axe (150) du chenal final est déterminé en fonction :
de la courbure des bords (167, 168) dudit complexe, en des points caractéristiques de chacun de ces bords; et
du signe de la courbure des points caractéristiques de chacun de ces bords.

14. Un produit de programme d'ordinateur, le programme comprenant des routines pour l'exécution des étapes du procédé selon l'une des revendications 1 à 13, lorsque ledit programme est exécuté sur un ordinateur.

15. Un système informatique comprenant une mémoire contenant un programme comprenant des routines pour l'exécution des étapes du procédé selon l'une des revendications 1 à 13, lorsque ledit programme est exécuté.
